(19) Europäisches Patentamt
European Patent Office
Office européen des brevets

(11) Veröffentlichungsnummer: **0 054 518**
**A1**

(12) # EUROPÄISCHE PATENTANMELDUNG

(21) Anmeldenummer: 81810494.5

(22) Anmeldetag: 11.12.81

(51) Int. Cl.³: C 08 K 5/52
C 07 F 9/12, C 08 L 61/10
C 08 L 67/06, C 08 L 75/04

(30) Priorität: 17.12.80 GB 8040435

(43) Veröffentlichungstag der Anmeldung: 23.06.82 Patentblatt 82/25

(84) Benannte Vertragsstaaten: DE FR IT NL SE

(71) Anmelder: CIBA-GEIGY AG
Patentabteilung Postfach
CH-4002 Basel(CH)

(72) Erfinder: Wilson, Roy
33 Offerton Road Hazel Grove
Stockport Cheshire, SK7 4NL(GB)

(72) Erfinder: Clubley, Brian George
7 Green Villa Park
Wilmslow Cheshire(GB)

(54) **Flammhemmende Polymermassen.**

(57) Polymere werden durch Verwendung von Phosphaten der allgemeinen Formel

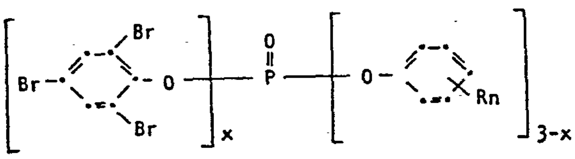,

worin R ein $C_1$-$C_9$-Alkyl, ein $C_6$-$C_9$-Cycloalkyl oder ein $C_7$-$C_9$-Aralkyl ist, n Null bis 3 ist, und x für einen Durchschnittswert grösser als Null aber kleiner als 3 steht, flammwidrig ausgerüstet.

Einige dieser Phosphate stellen neue Verbindungen dar.

EP 0 054 518 A1

Croydon Printing Company Ltd.

CIBA-GEIGY AG
Basel (Schweiz)

3-13200/+

# Flammhemmende Polymermassen

Vorliegende Erfindung betrifft Polymere enthaltend einen flammhemmenden Zusatz.

Gegenstand vorliegender Erfindung ist demnach ein Polymer enthaltend ein flammhemmendes Triarylphosphat oder ein Gemisch von Triarylphosphaten der allgemeinen Formel

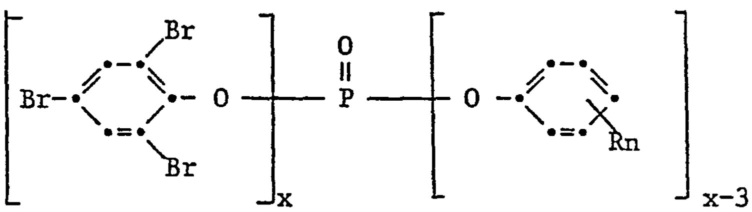

,

worin R ein $C_1$-$C_9$-Alkyl, ein $C_6$-$C_9$-Cycloalkyl oder ein $C_7$-$C_9$-Aralkyl bedeutet, n Null bis 3, vorzugsweise Null bis 2 ist, und x für einen Durchschnittswert grösser als Null aber kleiner als 3 steht.

Wird Triarylphosphat allein verwendet, dann bedeutet X eine Zahl 1 oder 2.

Wird eine Mischung von Triarylphosphaten verwendet, dann darf x für jede einzelne Verbindung die Zahl Null, 1, 2 oder 3 sein, so dass sich daraus ein Durchschnittswert über Null aber kleiner als 3, vorzugsweise ein Durchschnittswert zwischen 0,5 und 2,5 ergibt.

Beispiele für R sind Methyl, Ethyl, n-Propyl, Isopropyl, n-Butyl, sec.-Butyl, tert.-Butyl, Pentyl, Hexyl, Heptyl, Octyl, Nonyl, Cyclohexyl, Benzyl, Phenylethyl und Phenylpropyl.

R stellt bevorzugt eine Alkylgruppe mit 1 bis 4 Kohlenstoffatomen dar.

Beispiele für geeignete Phosphate sind:

Mono-(2,4,6-tribrom-phenyl)-diphenyl-phosphat,
Bis-(2,4,6-tribrom-phenyl)-monophenyl-phosphat,
Mono-(2,4,6-tribrom-phenyl)-bis-(p-cresyl)-phosphat,
Bis-(2,4,6-tribrom-phenyl)-mono-(2,6-xylyl)-phosphat,
Mono-(2,4,6-tribrom-phenyl)-bis-(m-ethylphenyl)-phosphat,
Mono-(2,4,6-tribrom-phenyl)-bis-(p-tert.-butylphenyl)-phosphat,
Bis-(2,4,6-tribrom-phenyl)-mono-(p-octylphenyl)-phosphat,
Bis-(2,4,6-tribrom-phenyl)-mono-(p-nonylphenyl)-phosphat,
Mono-(2,4,6-tribrom-phenyl)-bis-(o-cyclohexylphenyl)-phosphat
Bis-(2,4,6-tribrom-phenyl)-mono(p-benzylphenyl)-phosphat
Bis-(2,4,6-tribrom-phenyl)-mono-(p-phenylethylphenyl)-phosphat,
Mono-(2,4,6-tribrom-phenyl)-bis-(isopropyliertes phenyl)-phosphat,
Bis-(2,4,6-tribrom-phenyl)-mono-(isopropyliertes phenyl)-phosphat.

Der Ausdruck « -(isopropyliertes Phenyl)-» bedeutet, dass das Phosphat aus einer Mischung von Phenolen stammt, welche durch Isopropylierung des Phenols nach einer Friedel-Crafts Reaktion erhalten wurden, beispielsweise nach der in GB-PS 1 146 173 beschriebenen Methode. Eine solche Mischung enthält normalerweise unreagiertes Phenol, Mono-isopropylphenole (hauptsächlich die ortho- und para-Isomeren), Di-isopropylphenole und einige Tri-isopropylphenole.

Die Phosphate können nach an sich bekannten Verfahren hergestellt werden, so beispielsweise durch Phosphorylierung einer Mischung von Tribromphenol und geeignetem Alkylphenol oder einem Gemisch von Alkylphenolen nach einem ein- oder zweistufigen Prozess, oder durch Umsetzung von Tribromphenol mit einem Arylphosphoroxydichlorid oder Diarylphosphoroxychlorid, oder durch Reaktion eines Tribromphenylphosphoroxychlorids mit dem geeigneten Alkylphenol.

Die üblichen Phosphorylierungsmittel, wie Phosphoroxychlorid, Phosphor-pentachlorid können dafür verwendet werden. Die Reaktion kann in Gegenwart eines Katalysators geschehen, wie Aluminium-chlorid, Magnesium-chlorid oder in Gegenwart einer katalytischen Menge eines Amins oder Amids. Molare Mengen einer anorganischen oder organischen Base, wie Natriumhydroxid , Pyridin oder Triethylamin können aber auch verwendet werden. Die Reaktion kann in Ab- oder Anwesenheit eines organischen Lösungsmittels, wie Diethylether, Toluol, Xylol durchgeführt werden.

Einige dieser Phosphate stellen neue Verbindungen dar. Die vorliegende Erfindung betrifft demnach Triarylphosphate der allgemeinen Formel

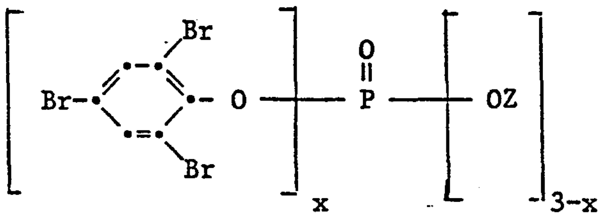

worin x einen Durchschnittswert grösser als Null, aber kleiner als 3 hat, und die Gruppe OZ ein Gemisch von Radikalen, welche sich von alkyliertem Phenol mit 5 bis 65 Gew.%, vorzugsweise 10 bis 40 Gew.%, Isopropyl- oder tert.-Butyl-Gruppen (auf das Phenolgewicht bezogen) ableiten, bedeutet.

Die Bedeutung der Gruppe OZ soll so verstanden werden, dass sie ein Gemisch von Radikalen darstellt, welche im Falle von isopropylierten Phenolderivaten diejenigen aus Phenol, o-Isopropylphenol, p-Isopropylphenol, m-Isopropylphenol, 2,4-Diisopropylphenol, 2,6-Diisopropylphenol, 2,4,6-Triisopropylphenol und anderen Di- und Tri-Isopropylphenolen mitumfassen. Die Menge jedes Isopropylphenolderivats im Gemisch hängt von den ausgewählten Bedingungen während des Alkylierungsprozesses ab, beispielsweise vom Katalysator und von der Reaktionstemperatur.

Eine typische Mischung der durch Isopropylierung von Phenol mit Propylen nach Friedel-Crafts Bedingungen erhaltenen Phenole, welche zur Herstellung der erfindungsgemässen Triarylphopshate eingesetzt werden kann, enthält 30% Phenol, etwa 40% o-Isopropylphenol, etwa 10% m-/p-Isopropylphenol, etwa 15% Diisopropylphenole und etwa 5% Triisopropylphenole.

Im Falle der tert.-butylierten Phenolderivate stellt die Gruppe OZ ein Gemisch von Radikalen dar, welche diejenigen aus Phenol, p-tert.-Butylphenol, m-tert.-Butylphenol und Di-tert.-butylphenolen in verschiedenen, vom Alkylierungsverfahren abhängigen Verhältnissen umfassen.

Die erfindungsgemässen Phosphate können als Flammschutzmittel für Polymere verwendet werden. Beispiele dafür sind:

1. Polymere aus Mono- und Diolefinen, beispielsweise Polyethylen, Polypropylen, Polyisobutylen, Polybuten-1, Polymethylpenten-1, Polyisopren oder Polybutadien, sowie Polymere aus Cycloolefinen, wie beispielsweise Cyclopenten oder Norbornen.

2. Mischungen der unter 1) genannten Polymeren, wie beispielsweise Gemische von Polypropylen mit Polyethylen oder Polyisobutylen.

3. Copolymere der Mono- und Diolefine miteinander oder mit anderen Vinylmonomeren, wie z.B. Ethylen-Propylen, Propylen-Buten-1, Propylen-Isobutylen, Ethylen-Buten-1, Propylen-Butadien, Isobutylen-Isopren, Ethylen-Ethylacrylat, Ethylen-Alkylmethacrylate, Ethylen-Vinylacetat oder Ethylen-Acrylsäure-Copolymere und ihre Salze (Ionomere), sowie Terpolymere des Ethylens mit Propylen und einem Dien, wie z.B. Hexadien, Dicyclopentadien oder Ethyliden-Norbornen.

4. Polystyrol.

5. Statistische Copolymere des Styrols oder des α-Methylstyrols mit Dienen oder Acrylsäurederivaten, wie z.B. Styrol-Butadien, Styrol-Acrylonitril, Styrol-Alkylmethacrylate, Styrol-Acrylonitril-Methylacrylat; Gemische von hochschlagzähen Styrol-Copolymeren und einem anderen Polymer, wie z.B. einem Polyacrylat, einem Dien-Polymer oder einem Ethylen-Propylen-Dien-Terpolymeren; Blockcopolymere des Styrols, wie z.B. Styrol-Butadien-Styrol, Styrol-Isopren-Styrol, Styrol-Ethylen-Butylen-Styrol oder Styrol-Ethylen-Propylen-Styrol.

6. Pfropf-Copolymere des Styrols, wie beispielsweise Styrol auf Polybutadien, Styrol und Acrylonitril auf Polybutadien, Styrol und Alkyl-Acrylate oder -methacrylate auf Polybutadien, Styrol und Acrylonitril auf Ethylen-Propylen-Dien-Terpolymeren, Styrol und Acrylonitril auf Polyacrylate oder Polymethacrylate, Styrol und Acrylonitril auf Acrylat-Butadien-Copolymere, sowie deren Mischungen mit den unter 5) aufgezählten Copolymeren, beispielsweise die als ABS-, MBS-, ASA- oder AES-Polymere bekannten Copolymere-Mischungen.

7. Halogenhaltige Polymere, wie Polychloropren, Chlorkautschuke, chlorierte oder sulfochlorierte Polyethylene, Polymere von halogenhaltigen Vinylderivaten, wie beispielsweise Polyvinylchlorid, Polyvinylidenchlorid, sowie deren Copolymere, wie z.B. Vinylchlorid-Vinylidenchlorid, Vinylchlorid-Vinylacetat oder Vinylidenchlorid-Vinylacetat-Copolymere.

8. Polymere, die sich von α-β-ungesättigten Säure-Derivaten ableiten, wie Polyacrylate und Polymethacrylate, Polyacrylamide und Polyacrylonitril.

9. Copolymere der unter 8) erwähnten Monomeren miteinander oder mit anderen ungesättigten Monomeren, wie beispielsweise Acrylonitril-Butadien-, Acrylonitril-Alkylacrylat- oder Acrylonitril-Vinylchlorid-Copolymere oder Acrylonitril-Alkylmethacrylat-Butadien-Terpolymere.

10. Polymere, die sich von ungesättigten Alkoholen und Aminen, bzw. deren Acrylderivaten oder deren Acetalen, wie Polyvinylacetat, -stearat, -benzoat, -maleat, Polyallylphthalat oder Polyallylmelamin ableiten.

11. Polyacetale, wie Polyoxymethylen und jene, die Ethylenoxid als Comonomer enthalten.

12. Polyphenylenoxide und -sulfide, sowie Gemische von Polyphenylenoxiden mit Polystyrol.

13. Polyurethane, die sich von Polyethern, Polyestern oder Polybutadien mit endständigen Hydroxylgruppen auf einer Seite und aliphatischen oder aromatischen Polyisocyanaten auf der anderen Seite ableiten, sowie deren Prepolymere.

14. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid oder Poly-m-phenylen-isophthalamid, sowie deren Copolymere mit Polyethern, wie z.B. mit Polyethylenglykol, Polypropylenglykol oder Polytetramethylenglykolen.

15. Polyharnstoffe, Polyimide und Polyamid-Imide.

16. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylol-cyclohexan-terephthalat und Polyhydroxybenzoate, sowie Block-Copolyether-ester, die sich von endständige Hydroxylgruppen enthaltenden Polyethern ableiten.

17. Polycarbonate.

18. Polysulfone und Polyethersulfone.

19. Vernetzte Polymere, die sich von Aldehyden einerseits und Phenolen, Kresolen, Harnstoffen und Melaminen andererseits ableiten, wie Phenol--Formaldehyd-, Kresol-Formaldehyd-, Phenol-Kresol-Formaldehyd-, Harnstoff-Formaldehyd- und Melamin-Formaldehyd-Harze.

20. Getrocknete und nicht-getrocknete Alkydharze.

21. Ungesättigte Polyesterharze, die sich von Copolyestern gesättigter und ungesättigter Dicarbonsäuren mit mehrwertigen Alkoholen und Vinylverbindungen als Vernetzungsmitteln ableiten, sowie deren halogenhaltige Abwandlungen mit niedriger Brennbarkeit.

22. Wärmehärtbare Acrylharze, die sich von substituierten Acrylsäureestern ableiten, wie Epoxyacrylate, Urethanacrylate oder Polyesteracrylate.

23. Alkyd-, Polyester- oder Acrylatharze in Gemischen mit Melamin-, Harnstoff-, Polyisocyanat- oder Epoxidharzen als Vernetzungsmittel.

24. Vernetzte Epoxidharze, die sich von Polyepoxiden ableiten, beispielsweise von Bisglycidylethern oder cycloaliphatischen Diepoxiden.

25. Natürliche Polymere, wie Cellulose, Gummi, Gallert und deren polymerhomolog chemisch abgewandelte Derivate, wie Celluloseacetate, -propionate und -butyrate, oder die Celluloseether sowie Methylcellulose.

26. Natürliche und synthetische organische Materialien, die reine Monomer-Verbindungen oder deren Mischungen darstellen, beispielsweise Mineralöle, tierische und pflanzliche Fette, Oele und Wachse, oder auf synthetische Ester (z.B. Phthalate, Adipate, Trimellitphosphate) basierende Oele, Fette und Wachse, sowie Mischungen von synthetischen Estern mit Mineralölen in allen Gewichtsverhältnissen, welche als Weichmacher für Polymere oder als Oele für Fasern-Herstellung verwendet werden können, sowie wässrige Emulsionen solcher Materialien.

27. Wässerige Emulsionen des natürlichen oder synthetischen Gummis, z.B. natürlicher Latex oder Latizes carboxylierter Styrol-Butadien-Copolymeren.

Die Phosphate können dem Polymer in einer Menge von 0,1 bis 100 Gewichtsteilen pro 100 Teile Polymer, vorzugsweise 1 bis 40 Gewichtsteile, und ganz besonders 2 bis 30 Gewichtsteile, zugegeben werden.

In manchen Polymeren ergeben sie eine verbesserte Flammschutzwirkung im Vergleich zu Gemischen enthaltend Brom- und Phosphor-Verbindungen, in anderen Polymeren ergeben sie mindestens so gute Resultate.

Die Zusammensetzungen der Erfindung können auch andere Ingredienten enthalten, die den Kunststoffen normalerweise zugesetzt werden, wie Hitzestabilisatoren, Lichtschutzmittel, UV-Absorber, Antioxydantien, Füllstoffe, Pigmente, Gleitmittel, Entformungshilfsmittel, Fungizide, Treibmittel, optische Aufheller, andere flammhemmende Zusätze, Verarbeitungshilfsmittel und rauchhemmende Mittel.

Die folgenden Beispiele illustrieren die Erfindung.

Beispiel 1: Herstellung von Mono-(tribromphenyl)-bis-isopropylphenyl)-phosphat

830 Teile 2,4,6-Tribromphenol, 384 Teile Phosphoroxychlorid und 7,5 Katalysatorteile Aluminiumchlorid werden auf 130°C innerhalb 3 Stunden unter Rühren erwärmt, dann eine weitere Stunde bei 130°C geheizt. 726 Teile einer Mischung von Phenol und isopropylierten Phenolen (enthaltend ungefähr 30% Phenol, 30% ortho-Isopropylphenol, 10% meta/para-Isopropylphenol, 20% Diisopropylphenole und 5% Triisopropylphenole, und durch Umsetzung von Phenol mit 0,725 Mol Propylen pro Mol Phenol hergestellt) werden dann bei 130°C während einer Stunde zugegeben. Die Temperatur wird auf 220°C innert einer Stunde erhöht, dann weitere 3 Stunden bei 220°C gehalten. Nach weiteren 3 Heizstunden bei 220°C unter Wasserstrahl-Vakuum wird die Reaktionsmischung auf Raumtemperatur abgekühlt und in 1500 Teilen Toluol gelöst. Die toluolische Lösung wird dann mit 2 x 1000 Teilen einer 5%igen Natriumhydroxidlösung und mit 4 x 1000 Teilen Wasser gewaschen. Das Lösungsmittel Toluol wird danach durch Eindampfen in einem Rotationsverdampfer bei 100°C unter Wasserstrahl-Vakuum vollständig entfernt. 1175 Teile einer viskosen braunen Flüssigkeit enthaltend 5,4% Phosphor und 35,0% Brom werden

dabei erhalten. Die $P^{31}$-NMR-Analyse zeigt, dass das Produkt aus einer Mischung von Triarylphosphaten besteht, hauptsächlich aus Mono-tribromophenyl)-bis(isopropylphenyl)-phosphaten.

Beispiel 2: Bis-(tribromphenyl)-isopropylphenyl-phosphat

218,5 Teile 2,4,6-Tribromphenol, 50,7 Teile Phosphoroxychlorid und 1,5 Katalysatorteile Aluminiumchlorid werden auf 200°C innerhalb drei Stunden unter Rühren erwärmt, dann weitere 2 Stunden bei 200°C gehalten. Die Reaktionsmischung wird auf 150°C abgekühlt. 48,6 Teile eines im Beispiel 1 beschriebenen Gemisches von Phenol und isopropylierten Phenolen werden danach innerhalb 30 Minuten bei 150°C zugegeben. Die Temperatur wird auf 220°C innerhalb einer Stunde erhöht und weitere 3 Stunden bei 220°C gehalten. Nach weiteren 3 Heizstunden bei 220°C unter Wasserstrahl-Vakuum wird das Reaktionsgemisch auf Raumtemperatur abgekühlt und in 250 Teilen Toluol gelöst. Die toluolische Lösung wird dann mit 2 x 250 Teilen einer 5%igen Natriumhydroxid-Lösung und 4 x 250 Teilen Wasser gewaschen. Das Lösungsmittel Toluol wird danach durch Eindampfen in einem Rotationsverdampfer bei 100°C unter Wasserstrahl-Vakuum vollständig entfernt. 168 Teile einer sehr viskosen braunen Flüssigkeit enthaltend 3,9% Phosphor und 43% Brom werden dabei isoliert. Die $P^{31}$-NMR-Analyse zeigt, dass das Produkt aus einer Mischung von Triarylphosphaten besteht, hauptsächlich aus Bis-(tribromphenyl)-isopropylphenyl-phosphaten.

Beispiel 3: Mono-(tribromphenyl)-diphenyl-phosphat

66,2 Teile 2,4,6-Tribromphenol, 30 Teile Triethylamin und 350 Teile Toluol (über Natrium getrocknet) werden gemischt und auf 5°C abgekühlt. 53,7 Teile Diphenylphosphoroxychlorid werden dann innerhalb 30 Minuten bei 0-10°C zugegeben. Die Reaktionsmischung wird auf Raumtemperatur erwärmt und danach auf Rückflusstemperatur erhitzt, dann weitere 5 Stunden auf Rückflusstemperatur gerührt. Die Mischung wird nun abgekühlt, das Triethylaminchlorhydrat abfiltriert und die toluolische Lösung mit 2 x 250 Teilen einer 5%igen Natriumhydroxid-

lösung und 4 x 250 Teilen Wasser gewaschen. Das Lösungsmittel Toluol wird danach durch Eindampfen in einem Rotationsverdampfer bei 100°C unter Wasserstrahl-Vakuum vollständig entfernt. 72,4 Teile einer viskosen Flüssigkeit enthaltend 5,4% Phosphor und 41% Brom werden dabei erhalten. Die $P^{31}$-NMR-Spektroskopie zeigt, dass das Produkt im wesentlichen aus reinem Mono-(tribromphenyl)-diphenyl-phosphat besteht.

Beispiel 4: Bis-(tribromphenyl)-phenyl-phosphat

66,2 Teile 2,4,6-Tribromphenol, 30 Teile Triethylamin und 250 Teile Toluol (über Natrium getrocknet) werden gemischt und auf 5°C abgekühlt. 21,1 Teile Phenylphosphoroxychlorid werden dann innerhalb 1 Stunde bei 0-10°C zugegeben. Das Reaktionsgemisch wird auf Raumtemperatur erwärmt, dann auf Rückflusstemperatur erhitzt und weitere 5 Stunden auf Rückflusstemperatur gerührt. Die Mischung wird danach abgekühlt, das Triethylaminchlorhydrat abfiltriert und die toluolische Lösung mit 2 x 250 Teilen einer 5%igen Natriumhydroxidlösung und 4 x 250 Teilen Wasser gewaschen. Das Lösungsmittel Toluol wird dann durch Eindampfen in einem Rotationsverdampfer bei 100°C unter Wasserstrahl-Vakuum vollständig entfernt. Das erhaltene weisse Produkt wird in wässerigem Aethanol rekristallisiert, was 24,4 Teile eines festen weissen Produkts enthaltend 3,8% Phosphor und 58% Brom ergibt. Die $P^{31}$-NMR-Spektroskopie zeigt, dass das Produkt im wesentlichen aus reinem Bis-(tribromphenyl)-phenyl-phosphat besteht. Das Produkt hat einen Schmelzpunkt von 132-135°C.

Beispiel 5:

Phenol-Formaldehyd/Papier-Laminate werden mit den in Tabelle 1 beschriebenen flammhemmenden Verbindungen hergestellt. Der Sauerstoff-Index (O.I.)wird gemäss ASTM-Methode 2863 gemessen, die Brennbarkeit gemäss "Test for Flammability of Plastic Materials [Prüfung von Kunststoffen auf Brennbarkeit]-UL94", Sept. 17, 1973 bestimmt.

Tabelle 1

| | O.I. | UL 94 Leistung |
|---|---|---|
| Kontrolle | 27.8 | H.B. |
| 20 Teile* der Verbindung nach Beispiel 1 | 32.3 | V 1 |
| 20 Teile* der Verbindung nach Beispiel 2 | 33.1 | V 0 |

* bedeutet Gewichtsteile pro 100 Teile Polymer.
Klasse V 1 bedeutet, dass der Prüfkörper nicht länger als 10 Sekunden gebrannt hat,
Klasse V 0 bedeutet, dass der Prüfkörper nicht länger als 30 Sekunden gebrannt hat.

Beispiel 6:

Muster eines ungesättigten Polyesterharzes enthaltend Methylethylketonperoxid (MEKP) als Katalysator und einen Kobalt-Beschleuniger werden mit der in Tabelle 2 beschriebenen Formulierung hergestellt. Sie zeigen die folgenden Resultate, wobei die angegebenen Zahlen Gewichtsteile bedeuten.

Tabelle 2

| | | | |
|---|---|---|---|
| ungesättigtes Polyester-Harz | 100 | 100 | 100 |
| Katalysator MEKP | 1 | 1 | 1 |
| Kobaltbeschleuniger | 0,2 | 0,2 | 0,2 |
| Verbindung nach Beispiel 1 | - | 10 | - |
| Verbindung nach Beispiel 2 | - | - | 10 |
| Sauerstoff-Index (%) | 22,1 | 24,7 | 26,3 |
| UL.94 Lesitung | H.B. | VO | VO |

Beispiel 7:
Muster eines Polyurethans werden mit den in Tabelle 3 beschriebenen Zusammensetzungen hergestellt. Sie zeigen die folgenden Resultate, wobei die angegebenen Zahlen Gewichtsteile bedeuten.

Tabelle 3

| | | | |
|---|---|---|---|
| Thermoplastische Polyurethane | 100 | 100 | 100 |
| Verbindung nach Beispiel 1 | - | 10 | - |
| Verbindung nach Beispiel 2 | - | - | 10 |
| Sauerstoff-Index (%) | 23,7 | 27,4 | 27,9 |

Patentansprüche

1. Polymer enthaltend ein flammhemmendes Triarylphosphat oder ein Gemisch von Triarylphosphaten der allgemeinen Formel

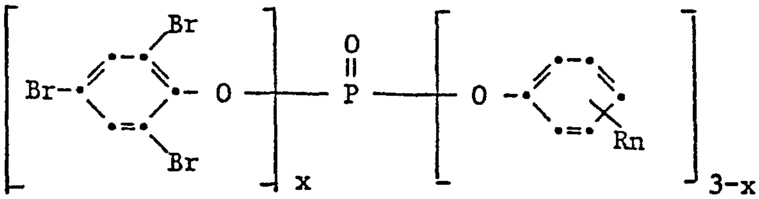

,

worin R ein $C_1$-$C_9$ Alkyl, oder ein $C_6$-$C_9$ Cycloalkyl oder ein $C_7$-$C_9$ Aralkyl ist, n Null bis 3 ist und x einen Durchschnittswert grösser als Null aber kleiner als 3 bedeutet.

2. Polymer nach Anspruch 1, wobei R ein Alkyl mit 1 bis 4 Kohlenstoffatomen ist.

3. Polymer nach Anspruch 1, wobei n Null bis 2 ist.

4. Polymer nach Anspruch 1, wobei R Isopropyl ist.

5. Polymer nach Anspruch 1, wobei x für einen Durchschnittswert von 0,5 bis 2,5 steht.

6. Polymer nach Anspruch 1, wobei das Phosphat die Formel

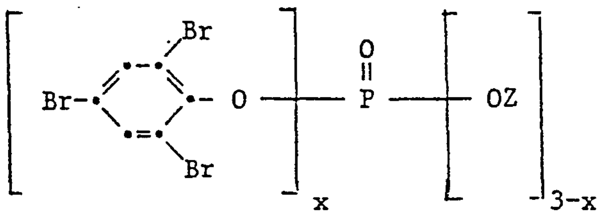

darstellt, worin x die im Anspruch 1 angegebene Bedeutung hat, und OZ eine Mischung von Radikalen ist, welche sich von alkyliertem Phenol enthaltend 5 bis 65 Gewichtsprozent Isopropylgruppen (bezogen auf

das Phenolgewicht) ableiten.

7. Polymer nach Anspruch 1, in welchem 0,1 bis 100 Gewichtsteile Phosphat pro 100 Gewichtsteile Polymer verwendet werden.

8. Polymer nach Anspruch 7, welches 1 bis 40 Gewichtsteile Phosphat pro 100 Gewichtsteile Polymer enthält.

9. Polymer nach Anspruch 1, das ein ungesättigter Polyester, ein Polyurethan oder ein phenolisches Formaldehyd-Polymer ist.

10. Polymer nach Anspruch 9, das ein Phenol-Formaldehyd/Papierlaminat ist.

11. Mischung von Triarylphosphaten der allgemeinen Formel

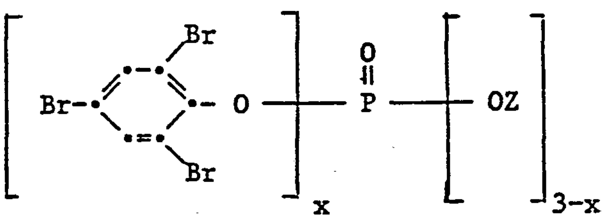

worin x einen Durchschnittswert grösser als Null, aber kleiner als 3 hat, und OZ ein Gemisch von Radikalen, welche sich von alkyliertem Phenol mit 5 bis 65 Gewichtsprozent Isopropyl- oder tert.-Butyl-Gruppen, bezogen auf das Phenolgewicht, ableiten, darstellt.

12. Verbindung nach Anspruch 11, wobei OZ sich von alkyliertem Phenol mit 10 bis 40 Gewichtsprozent Isopropyl- oder tert.-Butyl-Radikalen ableitet.

13. Polymer enthaltend ein flammhemmendes Gemisch von Triarylphosphaten nach Anspruch 1 und 11.

0054518

Europäisches Patentamt

# EUROPÄISCHER RECHERCHENBERICHT

Nummer der Anmeldung

EP 81 81 0494

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| A | DE - B - 1 225 383 (HOECHST AG)<br>* Anspruch; Beispiele *<br>-- | 1-13 | C 08 K 5/52<br>C 07 F 9/12<br>C 08 L 61/10<br>67/06<br>75/04 |
| A | FR - A - 2 216 293 (SANDOZ S.A.)<br>* Ansprüche 3 und 4; Seite 2, Zeile 31 - Seite 3, Zeile 7 *<br>---- | 1-13 | |
| | | | RECHERCHIERTE SACHGEBIETE (Int Cl.3) |
| | | | C 08 K 5/52<br>C 07 F 9/12<br>C 08 L 61/06<br>61/10<br>67/00<br>67/06<br>75/04 |
| | | | KATEGORIE DER GENANNTEN DOKUMENTE |
| | | | X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 30-03-1982 | HOFFMANN |